# EUROPEAN PATENT APPLICATION

(11) **EP 4 775 441 A1**
(43) Date of publication of application: **15.07.2026**
(21) Application number: 24863145.9
(22) Date of filing: 02.09.2024
(51) Int. Cl.: B60L 53/66, G06Q 20/14, G06Q 50/40

(54) **METHOD AND APPARATUS FOR CONTROLLING CHARGING OF ELECTRIC VEHICLE ON BASIS OF PNC**

(30) Priority: 05.09.2023 KR 20230117982
(71) Applicant: Yura Corporation Co., Ltd., Seongnam-si, Gyeonggi-do 13494 (KR)
(72) Inventor: KANG, Sae Hun, Seoul 08760 (KR)
(74) Representative: ABG Intellectual Property Law, S.L.
(86) International application number: PCT/KR2024/013186
(87) International publication number: WO 2025/053564

(57) **Abstract**

The present invention relates to an apparatus and a method for controlling charging of an electric vehicle on the basis of plug-and-charge (PnC), wherein a plurality of PnC contract certificates are stored in the apparatus, and a user sets a payment priority and a payment limit for each contract certificate. Thereafter, in an electric vehicle charging process, by controlling payments to be made up to the payment limit in the order of contract certificates with the fastest priority, a free payment method and charging convenience are provided to the user.

## Description

### [Technical Field]

The present invention relates to an electric vehicle charging control method and apparatus, and more specifically, to a Plug-and-Charge (PnC) based electric vehicle charging control method and apparatus.

### [Background Art]

Recently, as the adoption of electric vehicles has been accelerating, issues related to electric vehicle charging have been highlighted, and one of which is the problem of payment of costs during charging.

An electric vehicle starts charging after going through a certain authorization process. Representative authorization methods include a Plug-and-Charge (PnC) method in which authorization and payment are automatically completed using a contract certificate stored in the vehicle, and an external payment method in which identification, authorization, and payment are performed through a charger by an external identification means such as a user's credit card or RFID.

Among these, the PnC method, which has recently been spotlighted, is an automatic authorization method that does not require any special task from the user for charging payment, and automatically identifies the user and authorizes charging. Specifically, the plug-and-charge method refers to a method in which user authentication and charging are performed when a charging plug is connected between an electric vehicle and a charging station.

The ISO 15118 standard defines authentication based on a Public Key Infrastructure (PKI) as a basis for implementing the plug-and-charge method. According to the PKI system according to the ISO 15118 standard, a contract certificate generated based on an MO root certificate (MO RootCA cert.) issued by an MO Root Certificate Authority (MO RootCA) affiliated with a Mobility Operator (MO) is installed in the electric vehicle. In the charging station, a charging station certificate (SECC cert.) generated based on a V2G root certificate (V2G RootCA cert.) issued by a Vehicle-to-Grid (V2G) Root Certificate Authority (V2G RootCA) is installed.

In the authentication process and payment authorization process, the charging station receives and verifies the contract certificate chain from the electric vehicle, confirms whether it is a vehicle for which a normal charging contract has been established, and performs the payment procedure.

However, in the conventional PnC (Plug-and-Charge) payment method, payment is made using only one contract certificate. Therefore, even if a user wishes to split and pay charging fees with one or more accounts, there is no method to perform split payment, causing inconvenience to the user.

For example, if a user registers a specific credit card as a payment means for one contract certificate, in a case where the payment amount of the corresponding credit card is high and exceeds a limit in daily life, PnC-type charging is not performed, and charging according to another payment means must be performed instead of PnC-type charging.

In addition, when a user wishes to enjoy additional benefits of credit cards by using a plurality of credit cards for a certain amount of use each, the payment amount for each credit card must be adjusted. In a case where the payment of electric vehicle charging fees, which accounts for a large portion of expenditure in daily life, is performed only with one credit card corresponding to one contract certificate, inconvenience occurs in that a part of the amount must be paid by the PnC method and another part of the amount must be paid separately with a general credit card.

In addition, in the case of the conventional PnC-type charging payment method, before charging starts, only validity of a contract certificate linked to a payment means (such as a credit card, a bank account, or the like) is authenticated, and when the validity of the contract certificate is authenticated, charging is started without verification of payment capability. After charging is completed, payment for the charging fee is requested through the payment method (such as a credit card, a bank account, or the like) linked with the contract certificate.

In this case, when the limit of the credit card linked to the contract certificate is exceeded or the balance in the bank account is insufficient, a problem occurs in that the actual payment is not performed. Consequently, a situation occurs in which charging is completed, but payment of the charging fee is impossible.

In addition, according to the ISO 15118 standard defining the current PnC charging method, even if a user attempts to enter the amount of power to be charged and verify whether payment for the corresponding amount of power is possible before power transmission, only the possibility of payment can be confirmed, and information on up to what amount of power or amount of money payment is possible cannot be confirmed.

Therefore, from the user's perspective, if a notification is received that payment for a specific amount of power is impossible, the user must re-enter and confirm whether payment for another amount of power is possible. If, even in this case, a notification is received that payment is impossible, there exists a problem of having to repeat the cumbersome task of entering and confirming again whether payment for another amount of power is possible.

### [Detailed Description of the Invention]

### [Technical Problem]

The technical problems to be solved by the present invention are to provide a PnC-based electric vehicle charging control apparatus and method capable of storing a plurality of contract certificates therein and performing split payment of a charging fee with the plurality of contract certificates according to a user's convenience when charging an electric vehicle according to a PnC charging method.

In addition, another technical problem to be solved by the present invention is to provide a PnC-based electric vehicle charging control apparatus and method capable of automatically performing charging up to an amount payable with a payment means linked to a contract certificate when charging an electric vehicle according to the PnC charging method.

### [Technical Solution]

A PnC-based electric vehicle charging control method according to a preferred embodiment of the present invention for solving the above-described technical problems is a PnC-based electric vehicle charging control method performed in a vehicle charging control apparatus installed inside an electric vehicle and including a memory storing a plurality of contract certificates and instructions and a processor, the method comprising: (a) if a pre-set payment mode is a combined payment mode, loading, by the processor, a contract certificate having the highest priority among the plurality of pre-stored contract certificates; (b) receiving, by the processor, a rate table from a charging station and calculating a charging fee for a target charging amount; (c) if a payment limit of a currently loaded contract certificate is less than the charging fee, adjusting, by the processor, the target charging amount up to the payment limit; (d) performing, by the processor, charging for the target charging amount and settling the charging fee using the currently loaded contract certificate; and (e) if a remaining charging amount that has not been charged exists in an initial target charging amount input by a user and a contract certificate that has not yet been used for payment exists, loading, by the processor, a contract certificate of a next priority, updating the target charging amount by subtracting an already charged amount from the initial target charging amount, and re-performing starting from the step (b) for the updated target charging amount.

In addition, in the step (d), the processor requests payment authorization for the charging fee from the charging station, and if payment authorization fails, the processor may divide the target charging amount into a plurality of sub-charging amounts and perform charging and fee payment for each sub-charging amount.

In addition, in the step (d), the processor may divide the target charging amount into the plurality of sub-charging amounts in a unit of a pre-defined fixed charging amount, divide the target charging amount into the plurality of sub-charging amounts at a pre-defined ratio, or divide the target charging amount into the plurality of sub-charging amounts in a unit of a charging amount chargeable for a pre-defined time.

In addition, in the step (d), the processor may divide the target charging amount at a pre-defined ratio and repeatedly divide a remainder of the target charging amount at the pre-defined ratio to divide the target charging amount into the plurality of sub-charging amounts.

In addition, the step (d) may comprise: (d1) requesting payment authorization for the charging fee of the target charging amount from the charging station; (d2) if payment authorization fails, dividing the target charging amount into a plurality of sub-charging amounts; (d3) calculating a charging fee for a sub-charging amount and requesting payment authorization for the charging fee of the sub-charging amount from the charging station; and (d4) if payment authorization for the sub-charging amount is successful, performing charging for the sub-charging amount and settling the charging fee using a contract certificate, then re-performing starting from the step (d3) for a next sub-charging amount, and if payment authorization for the sub-charging amount fails, terminating a charging process for the corresponding sub-charging amount and proceeding to the step (e).

In addition, in the step (a), if the pre-set payment mode is a single payment mode, the processor may load a contract certificate selected by a user through a user terminal among the plurality of pre-stored contract certificates, or may load a contract certificate having the highest priority if the user has not selected a contract certificate.

In addition, a PnC-based electric vehicle charging control method according to another preferred embodiment of the present invention may further comprise, before the step (a): transmitting, by the processor, contract certificate information including a current payment limit and a payment priority for each of the plurality of contract certificates and payment mode information to a user terminal to be displayed; if the user modifies the contract certificate information or the payment mode information, receiving, by the processor, modified contract certificate information or payment mode information from the user terminal and storing the same; and receiving, by the processor, the initial target charging amount from the user terminal and storing the same.

In addition, the initial target charging amount is input in a form of any one of a charging rate, a fee, an amount of power, and a charging time, wherein if the initial target charging amount is input as a target charging rate, the processor calculates an amount of power required to perform charging up to the target charging rate and sets the calculated amount as the initial target charging amount, wherein if the initial target charging amount is input as a charging fee, the processor calculates an amount of power corresponding to a corresponding fee according to the rate table and sets the calculated amount as the initial target charging amount, wherein if the initial target charging amount is input as a charging time, the processor calculates an amount of power to be charged when charging is performed for a corresponding charging time and sets the calculated amount as the initial target charging amount, and in the step (b), the processor may calculate a charging fee for charging the calculated amount of power or power of the charging amount information according to the rate table.

Meanwhile, a PnC-based electric vehicle charging control apparatus according to another preferred embodiment of the present invention for solving the above-described technical problems is a vehicle charging control apparatus installed inside an electric vehicle and including a memory storing a plurality of contract certificates and instructions and a processor, wherein the processor is configured to execute the instructions stored in the memory to perform: (a) if a pre-set payment mode is a combined payment mode, loading a contract certificate having the highest priority among the plurality of pre-stored contract certificates; (b) receiving a rate table from the charging station and calculating a charging fee for a target charging amount; (c) if a payment limit of a currently loaded contract certificate is less than the charging fee, adjusting the target charging amount up to the payment limit; (d) performing charging for the target charging amount and settling the charging fee using the currently loaded contract certificate; and (e) if a remaining charging amount that has not been charged exists in an initial target charging amount input by a user and a contract certificate that has not yet been used for payment exists, loading a contract certificate of a next priority, updating the target charging amount by subtracting an already charged amount from the initial target charging amount, and re-performing starting from the step (b) for the updated target charging amount.

In addition, in the step (d), the processor may request payment authorization for the charging fee from the charging station, and if payment authorization fails, the processor may divide the target charging amount into a plurality of sub-charging amounts and perform charging and fee payment for each sub-charging amount.

In addition, in the step (a), the processor may divide the target charging amount into the plurality of sub-charging amounts in a unit of a pre-defined fixed charging amount, divide the target charging amount into the plurality of sub-charging amounts at a pre-defined ratio, or divide the target charging amount into the plurality of sub-charging amounts in a unit of a charging amount chargeable for a pre-defined time.

In addition, in the step (d), the processor may divide the target charging amount at a pre-defined ratio and repeatedly divide a remainder of the target charging amount at the pre-defined ratio to divide the target charging amount into the plurality of sub-charging amounts.

In addition, the step (d) may comprise: (d1) requesting payment authorization for the charging fee of the target charging amount from the charging station; (d2) if payment authorization fails, dividing the target charging amount into a plurality of sub-charging amounts; (d3) calculating a charging fee for a sub-charging amount and requesting payment authorization for the charging fee of the sub-charging amount from the charging station; and (d4) if payment authorization for the sub-charging amount is successful, performing charging for the sub-charging amount and settling the charging fee using a contract certificate, then re-performing starting from the step (d3) for a next sub-charging amount, and if payment authorization for the sub-charging amount fails, terminating a charging process for the corresponding sub-charging amount and proceeding to the step (e).

In addition, in the step (a), if the pre-set payment mode is a single payment mode, the processor may load a contract certificate selected by a user through a user terminal among the plurality of pre-stored contract certificates, or may load a contract certificate having the highest priority if the user has not selected a contract certificate.

In addition, the processor may further perform, before the step (a): transmitting contract certificate information including a current payment limit and a payment priority for each of the plurality of contract certificates and payment mode information to a user terminal to be displayed; if the user modifies the contract certificate information or the payment mode information, receiving modified contract certificate information or payment mode information from the user terminal and storing the same; and receiving the initial target charging amount from the user terminal and storing the same.

In addition, the initial target charging amount is input in a form of any one of a charging rate, a fee, an amount of power, and a charging time, wherein if the initial target charging amount is input as a target charging rate, the processor calculates an amount of power required to perform charging up to the target charging rate and sets the calculated amount as the initial target charging amount, wherein if the initial target charging amount is input as a charging fee, the processor calculates an amount of power corresponding to a corresponding fee according to the rate table and sets the calculated amount as the initial target charging amount, wherein if the initial target charging amount is input as a charging time, the processor calculates an amount of power to be charged when charging is performed for a corresponding charging time and sets the calculated amount as the initial target charging amount, and in the step (b), the processor may calculate a charging fee for charging the calculated amount of power or power of the charging amount information according to the rate table.

### [Advantageous Effects]

A PnC-based electric vehicle charging control method and apparatus according to a preferred embodiment of the present invention for solving the above-described problems store a plurality of PnC contract certificates inside the charging control apparatus and allow a user to set a payment priority and a payment limit for each contract certificate. Thereafter, in an electric vehicle charging process, by controlling payment to be performed up to the payment limit in an order of contract certificates having higher priorities during electric vehicle charging, it is possible to provide a flexible payment method and charging convenience to the user.

In addition, a PnC-based electric vehicle charging control apparatus and method according to a preferred embodiment of the present invention for solving the above-described problems, in a case where payment authorization fails in a payment authorization process performed before actual charging and fee payment occur although the validity of a contract certificate has been authenticated, divide an initial target charging amount into a plurality of sub-charging amounts and sequentially perform charging and fee payment for each sub-charging amount, thereby enabling automatic charging up to a payable amount even in a state where a user cannot confirm a payable charging power amount and charging fee.

### [Brief Description of Drawings]

FIGS. 1a and 1b are diagrams explaining a charging process according to the ISO 15118-2 standard.
FIG. 2 is a diagram showing the overall connection configuration of a PnC-based electric vehicle charging control apparatus according to a preferred embodiment of the present invention.
FIG. 3 is a block diagram showing the detailed configuration of a PnC-based electric vehicle charging control apparatus according to a preferred embodiment of the present invention.
FIGS. 4a to 4c are diagrams explaining the overall flow of an electric vehicle charging control method according to a preferred embodiment of the present invention.

### [Mode for Carrying Out the Invention]

Hereinafter, preferred embodiments of the present invention will be described with reference to the drawings.

Here, the above-described objects, features, and advantages of the present invention will become clearer through the following detailed description related to the accompanying drawings. However, as the present invention may have various changes and may have various embodiments, specific embodiments will be illustrated in the drawings and described in detail below.

Throughout the specification, the same reference numerals basically represent the same components. In addition, components having the same functions within the scope of the same idea appearing in the drawings of each embodiment will be described using the same reference numerals.

When it is stated in the specification that a certain part "includes" a certain component, this means that other components are not excluded but may be further included, unless otherwise particularly stated to the contrary. In addition, terms such as "... unit," "module," etc. described in the specification mean a unit that processes at least one function or operation, which may be implemented by hardware or software, or by a combination of hardware and software.

If it is determined that a detailed description of a well-known function or configuration related to the present invention may unnecessarily obscure the gist of the present invention, the detailed description thereof will be omitted. In addition, numbers (for example, first, second, etc.) used in the description process of this specification are merely identification symbols for distinguishing one component from another component.

An electric vehicle charging control apparatus and method according to a preferred embodiment of the present invention to be described below will be exemplarily described as following the Plug-and-Charge (PnC) protocol specified in the ISO 15118-2 standard.

Except for the characteristic configuration of the present invention explicitly described below, the overall charging procedure and charging payment procedure are the same as those applied to the above-mentioned ISO 15118-2 standard.

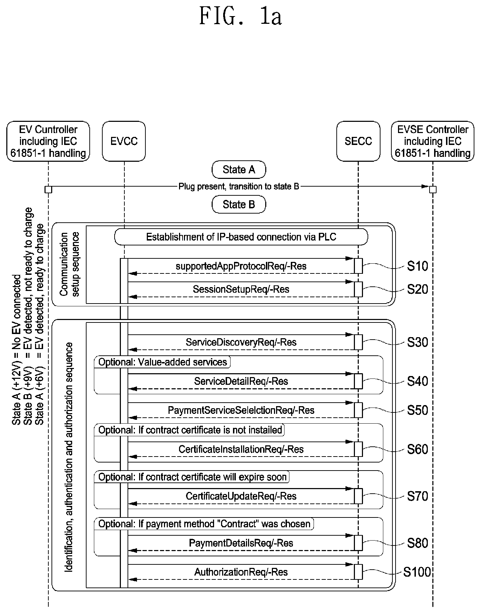

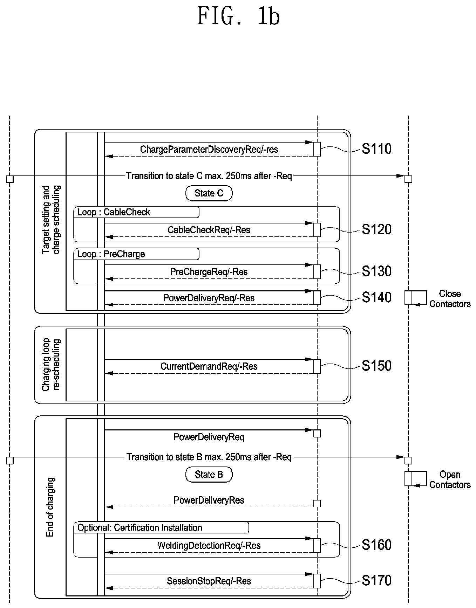

First, referring to FIGS. 1a and 1b illustrating a charging payment process according to the ISO 15118-2 standard, the charging and payment process according to the ISO 15118-2 standard will be described. Between a charging station (abbreviated as SECC (Supply Equipment Communication Controller)) and a charging control apparatus (abbreviated as EVCC (Electric Vehicle Communication Controller)), a SupportedAppProtocol step (S10) in which messages for setting an application layer protocol between the EVCC and the SECC are exchanged, and a SessionSetup step (S20) in which the EVCC transmits a message requesting to open one V2G communication session and the SECC responds with whether a new communication session or a previous communication session join is successful through the corresponding message are performed, so that a communication channel is established between the charger (SECC) and the charging control apparatus (EVCC).

Thereafter, a ServiceDiscovery step (S30) in which the EVCC requests discovery of all services provided by the SECC to the SECC, and the SECC responds with services that can be provided, such as AC charging, DC charging, EIM mode, and plug-and-charge mode, etc., and a ServiceDetail step (S40) in which the EVCC requests specific additional information from the SECC and the SECC provides the corresponding detailed parameter information, are performed.

A PaymentServiceSelection step (S50) in which the EVCC requests a payment method (EIM/Plug-and-Charge) for services provided by the SECC and the SECC responds with whether the selected service and payment method are accepted, a CertificateInstallation step (S60) in which the EVCC requests certificate installation to the SECC and installs the requested contract certificate if there is no installed contract certificate, a CertificateUpdate step (S70) in which the EVCC requests contract certificate renewal if there is a contract certificate about to expire, a PaymentDetail step (S80) in which the EVCC transmits a contract certificate chain and EMAID to the SECC to request a Challenge if the payment method is contract-based charging (plug-and-charge), the SECC verifies the EMAID and contract certificate chain and responds with a Challenge in the form of a 128-bit long random number if they are trustworthy, and an Authorization step (S100) in which the EVCC signs the request message body including the Challenge with the private key of the contract certificate, and the SECC verifies this signature, verifies whether it matches the Challenge sent previously, and responds with whether charging is approved, are sequentially performed.

Next, a ChargeParameterDiscovery step (S110) is performed in which the EVCC and SECC exchange their respective technical charging limits by delivering maximum and minimum allowable voltage levels and current amounts, the EVCC notifies the SECC of the charging power amount and desired departure time, and the SECC proposes a charging schedule to the EVCC. Here, the charging schedule includes the maximum power that can be charged while the electric vehicle is connected to the charging station and an optional SalesTariff.

Next, a CableCheck step (S120) of performing a cable check for safe charging, a PreCharge step (S130) of adjusting the output voltage of the charging station to the battery voltage of the electric vehicle, and a PowerDelivery step (S140) in which the EVCC requests power supply to the SECC by transmitting PowerDeliveryReq and transmits a charging profile to be followed by the EVCC during the charging process, and the SECC having received the PowerDeliveryReq message transmits a PowerDeliveryRes message including information on whether power is available to the EVCC, are performed.

Thereafter, a charging loop is performed by performing a CurrentDemand step (S150) in which the electric vehicle requests a specific current to the charging station by transmitting a CurrentDemandReq, and the SECC transmits a CurrentDemandRes to the EVCC to notify the electric vehicle of the state of the charging station and the current output voltage and current.

Finally, a SessionStop step (S170) is performed, thereby terminating the charging process according to the PnC protocol.

The charging control method according to a preferred embodiment of the present invention to be described below is performed based on the above-mentioned ISO 15118-2 standard, and details not specifically described are the same as the contents specified in the ISO 15118-2 standard shown in FIGS. 1a and 1b.

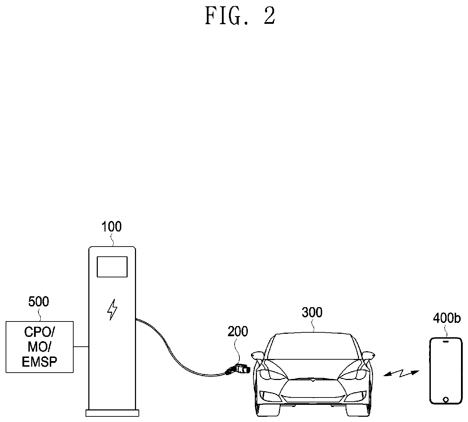

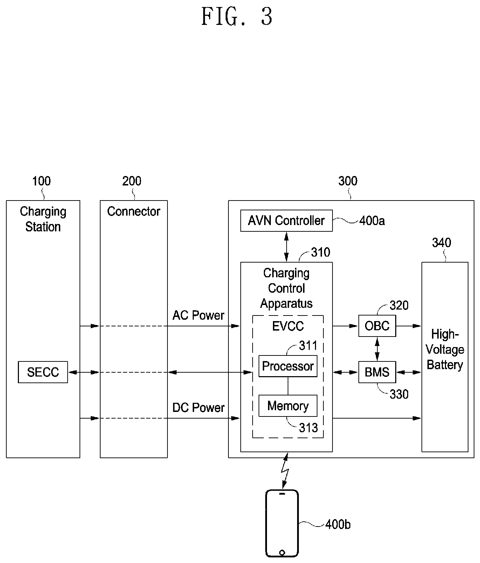

FIG. 2 is a diagram showing the overall connection configuration of a PnC-based electric vehicle charging control apparatus according to a preferred embodiment of the present invention, and FIG. 3 is a block diagram showing the detailed configuration of a charging control apparatus according to a preferred embodiment of the present invention.

Referring to FIGS. 2 and 3, a PnC-based electric vehicle charging control apparatus 310 according to a preferred embodiment of the present invention is installed inside the electric vehicle 300, is connected to the charging station 100 through the charger connector 200, controls charging power to be supplied from the charging station 100 to the electric vehicle 300, and performs fee payment for the charging power.

In addition, the charging control apparatus 310 is connected to an AVN controller 400a installed in the vehicle to display contract certificate information and payment mode information to a user, receives modification information on the contract certificate information and the payment mode information from the user to update them with the modification information, and receives a target charging amount input by the user.

In addition, the charging control apparatus 310 is connected to a user's mobile communication terminal 400b through a local area network such as Bluetooth or a mobile communication network, transmits contract certificate information and payment mode information to the mobile communication terminal 400b to be displayed to the user, receives modification information on the contract certificate information and the payment mode information from the mobile communication terminal 400b to update the contract certificate information and the payment mode information, and receives the target charging amount input by the user.

Hereinafter, for convenience of description, a configuration for displaying information to a user and receiving information from the user is collectively referred to as a user terminal 400a, 400b regardless of an installation location or an implementation method, and the AVN controller 400a and the mobile communication terminal 400b are also included in the user terminal 400a, 400b.

The charging station 100 is connected to a charging circuit (not shown) of the electric vehicle 300 and the charging control apparatus 310 through the connector 200, supplies charging power to the battery 340 through the charging circuit to charge the high-voltage battery 340, and not only exchanges charging-related information with the charging control apparatus 310 but also exchanges charging fee payment information for performing charging fee payment in a Plug-and-Charge manner.

A user, who is an electric vehicle operator to perform charging, enters into a PnC-related service use contract with a Charge Point Operator (CPO), a Mobility Operator (MO), or an eMobility Service Provider (eMSP), installs a contract certificate in the electric vehicle during initial charging, and thereafter selects a PnC service at a charging station 100 associated with the corresponding CPO, MO, or eMSP 500 to pay a charging fee.

Further referring to FIG. 3, the electric vehicle includes a charging control apparatus 310, an OBC 320, a BMS 330, and a high-voltage battery 340 therein, and may further include an AVN controller 400a therein.

An OBC (OnBoard Charger) 320 charges a battery 340 by converting AC power input from a charging station 100 through a connector 200 into DC power, and a BMS (Battery Management System) 330 controls an overall charging process within an electric vehicle.

An AVN controller 400a performs a function of outputting various information to a user and receiving information from the user. In relation to the present invention, the AVN controller 400a displays contract certificate information and payment mode information to the user, receives modification information on the contract certificate information and the payment mode information from the user, and outputs the information to a charging control apparatus 310. In addition, the AVN controller 400a receives a target charging amount from the user and outputs the target charging amount to the charging control apparatus 310.

The charging control apparatus 310 installed in the vehicle includes a processor 311 and a memory 313. The memory 313 according to a preferred embodiment of the present invention may store instructions executable by the processor 311 and programs executable by the processor 311, and may also store input/output data. Examples of the memory 313 may include an SSD (Solid State Drive), flash memory, ROM (Read-Only Memory), RAM (Random Access Memory), and the like.

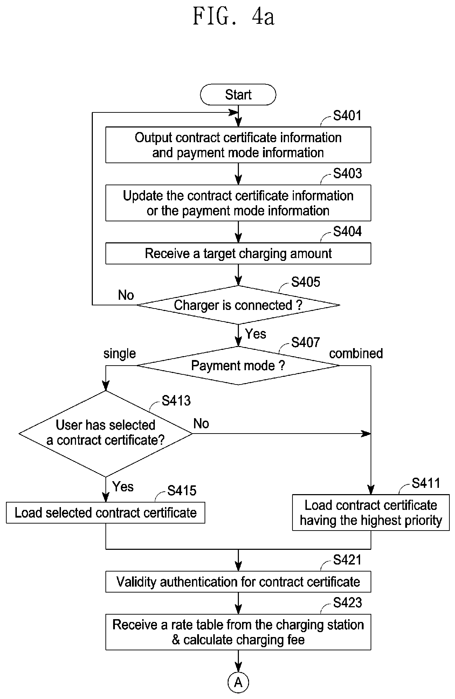

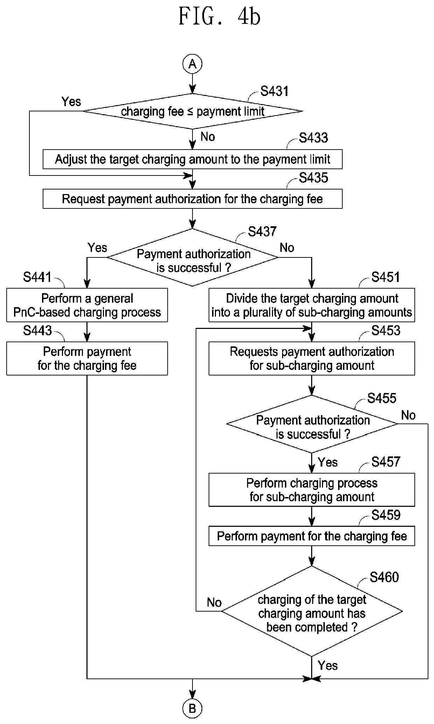

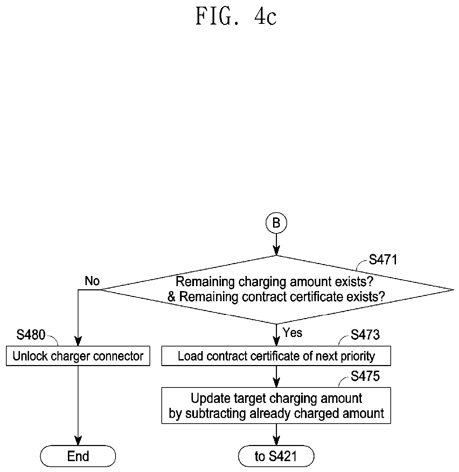

The processor 311 according to a preferred embodiment of the present invention may be implemented as a CPU (Central Processing Unit) or a similar device (e.g., MPU (Micro Processing Unit), MCU (Micro Control Unit), etc.), and by executing instructions stored in the memory 313, performs each step of a charging control method to be described later with reference to FIGS. 4a to 4c, and performs a function of an EVCC (Electric Vehicle Communication Controller) in performing PnC payment to communicate with an SECC (Supply Equipment Communication Controller) installed in the charging station 100.

In addition, the processor 311 is operatively linked with the OBC (OnBoard Charger) 320 and the BMS (Battery Management System) 330 to cause DC power received from the charging station 100 through the connector 200 to be output to the battery 340 so that the battery 340 is charged, or to cause AC power to be output to the OBC 320 and converted into DC power and then charge the battery 340.

Specific functions of the charging control apparatus 310 of the present invention will be described in more detail with further reference to FIGS. 4a to 4c.

FIGS. 4a to 4c are diagrams explaining an overall flow of an electric vehicle charging control method according to a preferred embodiment of the present invention.

With further reference to FIGS. 4a to 4c, a PnC-based electric vehicle charging control method performed by the electric vehicle charging control apparatus 310 shown in FIGS. 2 and 3 will be described. In a state where a user has pre-entered into a PnC-related service use contract with a Charge Point Operator (CPO), a Mobility Operator (MO), or an eMobility Service Provider (eMSP) and stored a plurality of contract certificates in the charging control apparatus 310, before the user performs electric vehicle charging by a PnC method, if the user selects modification mode for a contract certificate and/or payment mode by manipulating a user terminal 400a, 400b, the processor 311 of the charging control apparatus 310 transmits contract certificate information and payment mode information stored in the memory 313 to the user terminal 400a, 400b to be output (S401).

In a preferred embodiment of the present invention, a plurality of contract certificates and contract certificate information corresponding to each of the contract certificates may be stored in the memory 313, and the contract certificate information may include a payment limit and a payment priority. For example, contract certificates A and B may be stored in the memory 313, contract certificate information for contract certificate A may be set as a payment limit of 50,000 KRW & a 1st priority, and contract certificate information for contract certificate B may be set as a payment limit of 100,000 KRW & a 2nd priority. In addition, each contract certificate may be stored in linkage with payment information such as payment account or payment credit card information.

Meanwhile, the payment mode information stores whether it is a single payment mode or a combined payment mode. If the payment mode information is the combined payment mode, payment is sequentially performed up to a payment limit set by the user according to priorities of the contract certificate information, and if it is the single payment mode, payment for an entire charging amount is performed or payment is performed up to a payment limit pre-set by the user with a contract certificate selected by the user or a contract certificate of the highest priority.

Thereafter, if the user modifies the contract certificate information or the payment mode information, the processor 311 receives the modified contract certificate information or modified payment mode information from the user terminal 400a, 400b and stores the information in the memory 313 to update the contract certificate information or the payment mode information (S403), and receives a target charging amount (referred to as an "initial target charging amount") from the user terminal 400a, 400b and stores the same in the memory 313 (S404).

For example, in the above-described example, if the user modifies the payment mode information to the single payment mode through the user terminal 400a, 400b, sets a contract certificate to be used for payment as contract certificate B having the 2nd priority, and sets the contract certificate information of contract certificate B to a payment limit of 100,000 KRW, contract certificate B is loaded in step S415 to be described later, and the payment limit of 100,000 KRW is applied in step S431.

However, if the user does not update the contract certificate information and/or the payment mode information, the above-mentioned step S403 may be omitted. Also, at this time, the target charging amount received from the user terminal 400a, 400b may be input in a form of any one of a charging rate, a charging fee, an amount of charging power, and a charging time for convenience of the user.

Also, if the user does not input the target charging amount, the above-mentioned step S404 may be omitted, and at this time, the target charging amount may be set as a target charging amount previously set by the user or a default target charging amount pre-set in the vehicle.

Meanwhile, if it is detected that the charger connector 200 of the charging station 100 is connected, the processor 311 enters a charging process (S405), and after checking the payment mode information stored in the memory 313 (S407), if the payment mode is the combined payment mode, the processor 311 inquires each piece of contract certificate information of the plurality of contract certificates and loads a contract certificate having the highest priority from the memory 313 according to payment priorities (S411).

In step S407, if it is the single payment mode, it is checked whether the user has selected a contract certificate to be used this time among the plurality of contract certificates for payment in step S403, and if the user has not selected a contract certificate, the process proceeds to step S411 to load a contract certificate having the highest priority (S413), and if the user has selected a contract certificate, the selected contract certificate is loaded (S415).

After the contract certificate is loaded, the processor 311 performs validity authentication by providing the loaded contract certificate to the charging station 100, and if validity authentication fails, performs validity authentication by loading a contract certificate of a next priority or receiving a selection of another contract certificate from the user, and if authentication fails for all contract certificates, the charging process is terminated (S421).

If validity of the loaded contract certificate is authenticated, the processor 311 initiates a full-scale charging sequence, receives a rate table from the charging station 100, and calculates a charging fee according to the target charging amount (S423).

As described above, the target charging amount input from the user terminal in step 403 may be input in a form of any one of a charging rate, a charging fee, an amount of charging power, and a charging time for convenience of the user. If the target charging amount input by the user is a charging rate (e.g., in a case where a current charging rate is 10% and the target charging amount is a target charging rate of 40%), the processor 311 calculates an amount of power required to perform charging up to the target charging rate in consideration of a capacity difference (40% - 10% = 30%) between a current battery charging capacity and a capacity to be charged from the present, and calculates a charging fee for charging the calculated amount of power according to the rate table.

Also, if the target charging amount input by the user is a charging fee, the processor 311 calculates an amount of power corresponding to the charging fee according to the rate table. If the target charging amount input by the user is a charging time, the processor 311 calculates an amount of power to be charged when charging is performed for the corresponding charging time, and calculates a charging fee for charging the calculated amount of power according to the rate table.

Thereafter, the processor 311 compares the calculated charging fee with a payment limit of the currently loaded contract certificate (S431), and if the payment limit of the loaded contract certificate is equal to or greater than the calculated charging fee, the processor 311 proceeds directly to step S435, and if the payment limit of the loaded contract certificate is less than the calculated charging fee, the processor 311 adjusts the target charging amount for the loaded contract certificate to the payment limit (S433). At this time, the charging fee is adjusted to the payment limit of the currently loaded contract certificate.

Thereafter, the processor 311 requests payment authorization for the charging fee from the charging station 100 (S435).

If the payment authorization from the charging station 100 is successful (S437), the processor 311 performs a general PnC-based charging process by performing starting from step S120 shown in FIG. 1b (S441).

When the general charging process is completed, payment for the charging fee corresponding to the actually performed charging power amount is performed, and the process proceeds to step S471 (S443).

Meanwhile, in step S437, if payment authorization for the target charging amount fails from the charging station 100, the processor 311 divides the target charging amount into a plurality of sub-charging amounts (S451), calculates an estimated charging fee for the first sub-charging amount, and requests payment authorization from the charging station 100 (S453).

Referring to the above-described example, although the payment limit of contract certificate A is set to 50,000 KRW, if the payment limit of a credit card, which is a payment means linked to the corresponding contract certificate A, has only 40,000 KRW remaining, the payment authorization for the charging fee of 50,000 KRW may be rejected. In this case, the target charging amount corresponding to the payment amount of 50,000 KRW is divided into a plurality of sub-charging amounts.

In step S451, the target charging amount may be divided into a plurality of sub-charging amounts in various ways. For example, the target charging amount may be divided into units of a fixed charging amount (e.g., 1 kWh, 5 kWh, 10 kWh, etc.). The target charging amount may be divided into units of a charging amount at a pre-defined ratio (%) (e.g., 10%, 20%, etc., of the target charging amount). The target charging amount may be divided into units of a charging amount chargeable during a pre-defined time (e.g., 1 minute, 5 minutes, 10 minutes, etc.). In step S451, in what way the division will be performed may be pre-set by the user terminal 400a, 400b or may be set as a default in advance.

In step S453, if payment authorization for the sub-charging amount is successful (S455), the processor 311 performs a general PnC-based charging process for the payment-authorized sub-charging amount by performing starting from step S150 shown in FIG. 1b (S457), and pays the charging fee for the sub-charging amount (S459).

Thereafter, it is checked whether charging of the target charging amount for the corresponding contract certificate has been fully completed (i.e., it is checked whether a remaining sub-charging amount exists) (S460), and if charging of the target charging amount has been fully completed, the process proceeds to step S471.

If, as a result of checking in step S460, there is a sub-charging amount remaining that is not yet completed, the process proceeds to step S453 and charging for the next sub-charging amount is performed. For example, if the target charging amount is 10 kWh and each of the plurality of sub-charging amounts is 2 kWh, after charging for the first sub-charging amount of 2 kWh is completed, charging is performed for the next sub-charging amount of 2 kWh by performing the above-described steps S453 through S459, and the above-described steps S453 to S459 are sequentially performed respectively for the next sub-charging amounts of 2 kWh.

Meanwhile, in the above-described step S455, if payment authorization for the sub-charging amount is not successful, the charging process for the currently loaded contract certificate is terminated, and the process proceeds to step S471.

For example, it is assumed that the target charging amount within the payment limit for contract certificate A was 12 kWh, and the charging amount corresponding to an unknown charging fee that was payable with contract certificate A was 9 kWh. Then, in the case of dividing the target charging amount of 12 kWh into a plurality of sub-charging amounts in units of 2 kWh, charging up to the 4th sub-charging amount is automatically completed, and the process proceeds to step S471 as payment authorization fails in the payment authorization step (S455) for the 5th sub-charging amount.

In step S457 of the preferred embodiment of the present invention described so far, charging is performed in units of a sub-charging amount of a fixed amount or a fixed ratio set in advance, but in another preferred embodiment of the present invention, charging may be performed by dividing the target charging amount and the remaining target charging amount at a certain ratio.

For example, in another embodiment of the present invention, in step S451, 50% of the target charging amount is divided, and the above-described steps S453 to S460 may be sequentially performed in a manner of dividing 50% of the remaining target charging amount again into 50% and dividing the remaining target charging amount into 50% again, thereby continuously dividing the remaining target charging amount at the same ratio.

In this case, step S453 requests charging fee payment authorization to the charging station 100 for a sub-charging amount corresponding to 50% of the target charging amount, and if payment authorization is successful, charging for 50% of the target charging amount and fee payment are performed.

Thereafter, the processor requests payment authorization from the charging station 100 for a sub-charging amount (25% of the target charging amount before division) corresponding to 50% of the remaining target charging amount (50% of the target charging amount before division), and if payment authorization is successful, charging is performed for 50% of the remaining target charging amount (25% of the target charging amount before division) and then fee payment is performed. And the above-described process is repeated for the remaining target charging amount (25% of the target charging amount before division).

Meanwhile, when the charging payment for the contract certificate is completed by performing the above-described steps S435 to S460, the processor 311 checks whether a remaining target charging amount that has not yet been charged (obtained by subtracting the charging amount already completed from the initial target charging amount) exists and whether a remaining contract certificate that has not yet been paid exists (S471). If the remaining target charging amount exists and the remaining contract certificate exists, the process proceeds to a re-charging mode to load a contract certificate of a next priority (S473), updates the target charging amount by subtracting the charging amount paid with the contract certificate of the previous priority from the initial target charging amount received from the user terminal 400a, 400b, and proceeds to step S421 to perform a validity authentication procedure again for the loaded contract certificate (S475).

In the above example, if the target charging amount received from the user terminal 400a, 400b is a charging fee of 120,000 KRW, and charging and fee payment are performed for 50,000 KRW, which is the payment limit of contract certificate A, by performing steps S433 to S460, the target charging amount is updated to a charging amount corresponding to the difference of 70,000 KRW.

Also, in the above example, if the target charging amount received from the user terminal 400a, 400b is a charging fee of 120,000 KRW, and fee payment is performed for 40,000 KRW, which is a payable amount of contract certificate A, by performing steps S451 to S460, the target charging amount is updated to a charging amount corresponding to the difference of 80,000 KRW.

The processor 311 initiates a charging process for a contract certificate of a next priority (contract certificate B in the above example) according to the updated target charging amount, receives a rate table from the charging station 100, and calculates a charging fee according to the remaining charging amount (S423).

Thereafter, the processor 311 compares the charging fee calculated according to the updated target charging amount with a payment limit of the currently loaded contract certificate (2nd priority contract certificate B) (S431), and if the payment limit of the currently loaded contract certificate is less than the calculated charging fee, updates the target charging amount to the limit of the loaded contract certificate (S433) and performs the above-described steps S435 to S460.

Thereafter, in step S471, if charging for the initial target charging amount is completed and the remaining target charging amount does not exist, or if payment has already been performed for all contract certificates despite the existence of a charging amount to be charged and a remaining contract certificate no longer exists (S471), the processor 311 fully terminates the charging process by unlocking the charger connector 200 (S480).

The electric vehicle charging control method according to the preferred embodiment of the present invention described so far may be implemented as a computer program implemented with instructions executable in a computer and stored in a non-transitory storage medium.

The storage medium includes all kinds of recording devices in which data that can be read by a computer system is stored. Examples of computer-readable storage media include ROM, RAM, CD-ROM, optical data storage devices, and the like. In addition, the computer-readable storage medium may be distributed in computer systems connected through a network, and computer-readable codes may be stored and executed in a distributed manner.

So far, the present invention has been explained centering on its preferred embodiments. A person with ordinary knowledge in the technical field to which the present invention belongs will be able to understand that the present invention can be implemented in a modified form within a range that does not deviate from the essential characteristics of the present invention. Therefore, the disclosed embodiments should be considered from an explanatory point of view rather than a limiting point of view. The scope of the present invention is shown in the claims rather than the foregoing description, and all differences within the equivalent scope should be interpreted as being included in the present invention.

## Claims

1. A PnC (Plug-and-Charge) based electric vehicle charging control method performed in a vehicle charging control apparatus installed inside an electric vehicle and including a memory storing a plurality of contract certificates and instructions and a processor, the method comprising:
(a) if a pre-set payment mode is a combined payment mode, loading, by the processor, a contract certificate having the highest priority among the plurality of pre-stored contract certificates;
(b) receiving, by the processor, a rate table from a charging station and calculating a charging fee for a target charging amount;
(c) if a payment limit of a currently loaded contract certificate is less than the charging fee, adjusting, by the processor, the target charging amount to the payment limit;
(d) performing, by the processor, charging for the target charging amount and settling the charging fee using the currently loaded contract certificate; and
(e) if a remaining charging amount that has not been charged exists in an initial target charging amount input by a user and a contract certificate that has not yet been used for payment exists, loading, by the processor, a contract certificate of a next priority, updating the target charging amount by subtracting an already charged amount from the initial target charging amount, and re-performing starting from the step (b) for the updated target charging amount.

2. The method of claim 1, wherein in the step (d), the processor requests payment authorization for the charging fee from the charging station, and if payment authorization fails, divides the target charging amount into a plurality of sub-charging amounts and performs charging and fee payment for each sub-charging amount.

3. The method of claim 2, wherein in the step (d), the processor divides the target charging amount into the plurality of sub-charging amounts in a unit of a pre-defined fixed charging amount, divides the target charging amount into the plurality of sub-charging amounts at a pre-defined ratio, or divides the target charging amount into the plurality of sub-charging amounts in a unit of a charging amount chargeable for a pre-defined time.

4. The method of claim 2, wherein in the step (d), the processor divides the target charging amount at a pre-defined ratio and repeatedly divides a remainder of the target charging amount at the pre-defined ratio to divide the target charging amount into the plurality of sub-charging amounts.

5. The method of claim 2, wherein the step (d) comprises:
(d1) requesting payment authorization for the charging fee of the target charging amount from the charging station;
(d2) if payment authorization fails, dividing the target charging amount into a plurality of sub-charging amounts;
(d3) calculating a charging fee for a sub-charging amount and requesting payment authorization for the charging fee of the sub-charging amount from the charging station; and
(d4) if payment authorization for the sub-charging amount is successful, performing charging for the sub-charging amount and settling the charging fee using a contract certificate, then re-performing starting from the step (d3) for a next sub-charging amount, and if payment authorization for the sub-charging amount fails, terminating a charging process for the corresponding sub-charging amount and proceeding to the step (e) .

6. The method of claim 1, wherein in the step (a), if the pre-set payment mode is a single payment mode, the processor loads a contract certificate selected by a user through a user terminal among the plurality of pre-stored contract certificates, or loads a contract certificate having the highest priority if the user has not selected a contract certificate.

7. The method of claim 1, further comprising, before the step (a):
transmitting, by the processor, contract certificate information including a current payment limit and a payment priority for each of the plurality of contract certificates and payment mode information to a user terminal to be displayed;
if the user modifies the contract certificate information or the payment mode information, receiving, by the processor, modified contract certificate information or payment mode information from the user terminal and storing the same; and
receiving, by the processor, the initial target charging amount from the user terminal and storing the same.

8. The method of claim 1,
wherein the initial target charging amount is input in a form of any one of a charging rate, a fee, an amount of power, and a charging time,
wherein if the initial target charging amount is input as a target charging rate, the processor calculates an amount of power required to perform charging up to the target charging rate and sets the calculated amount of power as the initial target charging amount,
wherein if the initial target charging amount is input as a charging fee, the processor calculates an amount of power corresponding to the charging fee according to the rate table and sets the calculated amount of power as the initial target charging amount,
wherein if the initial target charging amount is input as a charging time, the processor calculates an amount of power to be charged during the charging time and sets the calculated amount of power as the initial target charging amount, and
wherein the step (b) comprises calculating, by the processor, a charging fee for charging the calculated amount of power or an amount of power of charging amount information according to the rate table.

9. A PnC-based electric vehicle charging control apparatus installed inside an electric vehicle and including a memory storing a plurality of contract certificates and instructions and a processor,
wherein the processor is configured to execute the instructions stored in the memory to perform:
(a) if a pre-set payment mode is a combined payment mode, loading a contract certificate having the highest priority among the plurality of pre-stored contract certificates;
(b) receiving a rate table from a charging station and calculating a charging fee for a target charging amount;
(c) if a payment limit of a currently loaded contract certificate is less than the charging fee, adjusting the target charging amount to the payment limit;
(d) performing charging for the target charging amount and settling the charging fee using the currently loaded contract certificate; and
(e) if a remaining charging amount that has not been charged exists in an initial target charging amount input by a user and a contract certificate that has not yet been used for payment exists, loading a contract certificate of a next priority, updating the target charging amount by subtracting an already charged amount from the initial target charging amount, and re-performing starting from the step (b) for the updated target charging amount.

10. The apparatus of claim 9, wherein in the step (d), the processor requests payment authorization for the charging fee from the charging station, and if payment authorization fails, divides the target charging amount into a plurality of sub-charging amounts and performs charging and fee payment for each sub-charging amount.

11. The apparatus of claim 10, wherein in the step (d), the processor divides the target charging amount into the plurality of sub-charging amounts in a unit of a pre-defined fixed charging amount, divides the target charging amount into the plurality of sub-charging amounts at a pre-defined ratio, or divides the target charging amount into the plurality of sub-charging amounts in a unit of a charging amount chargeable for a pre-defined time.

12. The apparatus of claim 10, wherein in the step (d), the processor divides the target charging amount at a pre-defined ratio and repeatedly divides a remainder of the target charging amount at the pre-defined ratio to divide the target charging amount into the plurality of sub-charging amounts.

13. The apparatus of claim 10, wherein the step (d) comprises:
(d1) requesting payment authorization for the charging fee of the target charging amount from the charging station;
(d2) if payment authorization fails, dividing the target charging amount into a plurality of sub-charging amounts;
(d3) calculating a charging fee for a sub-charging amount and requesting payment authorization for the charging fee of the sub-charging amount from the charging station; and
(d4) if payment authorization for the sub-charging amount is successful, performing charging for the sub-charging amount and settling the charging fee using a contract certificate, then re-performing starting from the step (d3) for a next sub-charging amount, and if payment authorization for the sub-charging amount fails, terminating a charging process for the corresponding sub-charging amount and proceeding to the step (e).

14. The apparatus of claim 9, wherein in the step (a), if the pre-set payment mode is a single payment mode, the processor loads a contract certificate selected by a user through a user terminal among the plurality of pre-stored contract certificates, or loads a contract certificate having the highest priority if the user has not selected a contract certificate.

15. The apparatus of claim 9, wherein the processor further performs, before the step (a):
transmitting contract certificate information including a current payment limit and a payment priority for each of the plurality of contract certificates and payment mode information to a user terminal to be displayed;
if the user modifies the contract certificate information or the payment mode information, receiving modified contract certificate information or payment mode information from the user terminal and storing the same; and
receiving the initial target charging amount from the user terminal and storing the same.

16. The apparatus of claim 9,
wherein the initial target charging amount is input in a form of any one of a charging rate, a fee, an amount of power, and a charging time,
wherein if the initial target charging amount is input as a target charging rate, the processor calculates an amount of power required to perform charging up to the target charging rate and sets the calculated amount of power as the initial target charging amount,
wherein if the initial target charging amount is input as a charging fee, the processor calculates an amount of power corresponding to the charging fee according to the rate table and sets the calculated amount of power as the initial target charging amount,
wherein if the initial target charging amount is input as a charging time, the processor calculates an amount of power to be charged during the charging time and sets the calculated amount of power as the initial target charging amount, and
in the step (b), the processor calculates a charging fee for charging the calculated amount of power or an amount of power of charging amount information according to the rate table.
